# EUROPÄISCHE PATENTSCHRIFT

(11) **EP 2 414 808 B1**
(45) Veröffentlichungstag und Bekanntmachung des Hinweises auf die Patenterteilung: **29.05.2013**
(21) Anmeldenummer: 10706998.1
(22) Anmeldetag: 02.03.2010
(51) Int. Cl.: G01M 15/10, G01M 15/02, G01N 1/22

(54) **ANLAGE ZUR ENTNAHME VON ABGASPROBEN VON VERBRENNUNGSKRAFTMASCHINEN**
SYSTEM FOR TAKING EXHAUST GAS SAMPLES FROM INTERNAL COMBUSTION ENGINES
INSTALLATION DE PRÉLÈVEMENT D'ÉCHANTILLONS DE GAZ D'ÉCHAPPEMENT DE MOTEURS À COMBUSTION INTERNE

(30) Priorität: 31.03.2009 DE 102009015188
(43) Veröffentlichungstag der Anmeldung: 08.02.2012
(73) Patentinhaber: AVL Emission Test Systems GmbH, 41460 Neuss (DE)
(72) Erfinder: DICKOW, Achim, 42555 Velbert (DE)
(74) Vertreter: Patentanwälte ter Smitten Eberlein Rütten Partnerschaftsgesellschaft
(86) Internationale Anmeldenummer: PCT/EP2010/052588
(87) Internationale Veröffentlichungsnummer: WO 2010/112286

(56) Entgegenhaltungen:
- EP-A1- 0 561 557
- EP-A1- 1 477 801
- DE-A1- 19 505 415
- DE-A1- 19 631 922
- US-A- 5 907 109

## Beschreibung

Die Erfindung betrifft eine Anlage zur Entnahme von Abgasproben von Verbrennungskraftmaschinen mit einem ersten Abgaskanal, welcher über einen ersten Abgaseinlass mit einer ersten Abgasquelle fluidisch verbindbar ist, einem ersten Luftkanal, in den über einen ersten Luftfilter Umgebungsluft ansaugbar ist, einer ersten Mischzone, in der der erste Abgaskanal in den ersten Luftkanal mündet, einem Verdünnungstunnel, der von einem Abgas-Luft-Gemisch durchströmbar ist, zumindest einer Probenahmesonde, einer Pumpe zur Förderung der Luft und des Abgases sowie Mitteln zur Regelung und Messung der Massenströme.

Es existieren verschiedene staatliche Bestimmungen, nach denen die Motoren von Kraftfahrzeugen bestimmte Emissionsgrenzwerte nicht überschreiten dürfen, so beispielsweise die ECE-Richtlinie R 83 für den europäischen Raum oder der Code of federal regulations Gesetz Nr.40 für den US-amerikanischen Raum. In diesen Normen wird neben den Emissionsgrenzwerten auch die Art der Probenahme durch Anlagen mit variabler Verdünnung zur Messung der Emissionen größtenteils geregelt.

Derartige Anlagen sind beispielsweise unter dem Begriff CVS-Anlage (constant volume sampling) bekannt. Bei diesen Anlagen wird dem Abgas immer soviel Luft beigemischt, dass ein konstanter Gesamtvolumenstrom des Luft-Abgas-Gemisches entsteht. Die über diese Anlagen in Beuteln entnommenen Proben werden im Folgenden bezüglich ihrer Schadstoffanteile analysiert. Insbesondere werden der Kohlendioxid-, der Kohlenmonoxid, Kohlenwasserstoff sowie der Stickoxid-Anteil gemessen. Während bislang eine Partikelmessung nur für Dieselmotoren durchgeführt werden musste, so ist diese in Zukunft auch für direkt einspritzende Ottomotoren Pflicht.

Eine Weiterbildung einer CVS-Anlage zur Entnahme von Abgasproben wird in der DE 693 15 463 T2 beschrieben. Diese Anlage weist einen Abgaseinlass sowie einen Lufteinlass auf, vor dem ein Luftfilter angeordnet ist. Über eine geregelte Pumpe werden die beiden Gasströme in eine folgende Mischzone gesaugt, von wo aus sie möglichst homogen gemischt in einen Verdünnungstunnel gelangen. Im Verdünnungstunnel in ausreichendem Abstand von der Mischzone ist eine subsonische Venturl-Düse angeordnet, die mit einem Kanal zur Entnahme einer Probe verbunden ist, wobei der Gasstrom durch diesen Kanal über eine zweite Pumpe erzeugt wird. Im weiteren Verlauf des Verdünnungstunnels vor der Förderpumpe verengt sich dieser wiederum in Form einer subsonischen Venturidüse. Über diese Venturidüsen werden die Massenströmungsgeschwindigkeiten ermittelt, welche so eingestellt werden, dass sie proportional zueinander sind. Über verschiedene weitere Sensoren werden der Druck oder die Temperatur des Mischgases bestimmt und einer Steuereinheit zugeführt, über die die Proportionalität der Massenströmungsgeschwindigkeiten an den beiden Venturidüsen und ein gleicher Wirkdruck sichergestellt werden sollen.

Ein derartiges System eignet sich jedoch, wie auch die bekannten CVS-Anlagen, nicht zur Verwendung als Anlage zur Abgasprobenahme für Otto- und Dieselmotoren, da mit Partikel- sowie Kohlenwasserstoffablagerungen im Bereich des Leitungssystems gerechnet werden muss, die eine nachfolgende Messung verfälschen würden.

So ist der derzeitige Stand der Entwicklungen, dass zwei parallele Verdünnungstunnel mit zwei Probenahmesonden verwendet werden, bei denen lediglich über eine gemeinsame Förderpumpe die notwendige Fördergeschwindigkeit erzeugt wird.

Zwar ist aus der DE 195 05 415 A1 ein Abgasprüfstand bekannt, bei dem zwei Rollenprüfstände an eine einzelne CVS-Anlage angeschlossen sind, jedoch wird hier lediglich der Abgaseinlass umgeschaltet, so dass eine Nutzung eines Zweiges für Dieselmotoren und eines Zweiges für Ottomotoren nicht möglich ist, da mit Partikel-und HC-Rückständen im Bereich der Mischzone zu rechnen ist.

Des Weiteren ist aus der DE 196 31 922 A1 eine Anlage mit mehreren Probeentnahmeeinhelten bekannt, die nebeneinander angeordnet sind und jeweils eine CVS-Anlage aufweisen. Diese Anlagen teilen sich einen gemeinsamen luftzufuhranschluss.

Daher stellt sich die Aufgabe, eine Anlage zu entwickeln, welche entsprechend der gesetzlichen Vorschriften geeignet ist, sowohl für Diesel- als auch für Ottomotoren eine zuverlässige und korrekte Probenahme, insbesondere zur Partikelmessung zu ermöglichen, wobei gleichzeitig Bauraum eingespart und Herstellkosten reduziert werden sollen.

Diese Aufgabe wird dadurch gelöst, dass die Anlage einen zweiten Abgaskanal, welcher über einen zweiten Abgaseinlass mit einer zweiten Abgasquelle fluidisch verbindbar ist und eine zweite Mischzone aufweist, wobei die verdünnten Abgas-Luft-Massenströme wahlweise aus der ersten Abgasquelle oder der zweiten Abgasquelle in den einen Verdünnungstunnel und zur zumindest einen Probenahmesonde leitbar sind. Durch einen derartigen Aufbau, können sowohl der Verdünnungstunnel als auch die Probenahmesonde sowie die Förderpumpe für beide Messungen gemeinsam benutzt werden, so dass Herstell- und Montagekosten sowie der benötigte Bauraum reduziert werden.

Vorzugsweise mündet in der zweiten Mischzone der zweite Abgaskanal in einen zweiten Luftkanal, in den über einen zweiten Luftfilter Umgebungsluft ansaugbar ist. Hierdurch wird vermieden, dass Ablagerungen der ersten Mischzone durch den ersten Luftkanal beziehungsweise die erste Mischzone in den Mischstrom des zweiten Weges mitgerissen werden und so die zu entnehmende Probe verfälschen.

Eine besonders gute Mischung erhält man, wenn die erste Mischzone durch ein Rohrende des ersten Abgaskanals, welches im Wesentlichen konzentrisch im ersten Luftkanal angeordnet ist, gebildet ist. Hierdurch wird eine repräsentative Probenahme ermöglicht.

In einer weiterführenden Ausführung ist unmittelbar hinter dem Rohrende des ersten Abgaskanals in der ersten Mischzone eine Blende angeordnet. Durch die Blende erhöht sich im Bereich des Mischungspunktes die Geschwindigkeit der Luft im an das erste Abgasrohr angrenzenden Bereich, wodurch die Mischung zusätzlich homogenisiert wird.

In einer besonders bevorzugten Ausführung mündet in Strömungsrichtung hinter der ersten Mischzone ein Mischrohr in den Verdünnungstunnel, welches in Strömungsrichtung hinter der zweiten Mischzone angeordnet ist, wobel der Verdünnungstunnel an seiner Begrenzungswand eine Öffnung aufweist, welche durch das Mischrohr verschlossen ist und an der das Mischrohr endet. Durch eine derartige Zuleitung des zweiten Gasstromes in den Verdünnungstunnel wird eine Beeinflussung des ersten Gasstromes durch vorhandene Einbauten oder dergleichen zuverlässig vermieden.

Um ein Ansaugen von Luft aus dem jeweils nicht verwendeten Luftkanal oder Abgaskanal zu vermeiden, ist im Mischrohr und zwischen dem ersten Luftfilter und der Mündung des Mischrohres jeweils eine Regelklappe angeordnet.

Vorzugsweise ist das Ende des Mischrohres schräg in Strömungsrichtung zum Verdünnungstunnel angeordnet. Dies führt zu einer weitestgehend druckverlustfreien Einleitung aus dem Mischrohr in den Verdünnungstunnel. Zusätzlich werden zu Turbulenzen führende Kanten bei der Verwendung des ersten Abgasweges beim Vorbeiströmen an der Einleitstelle zuverlässig vermieden. Für beide Wege werden somit Strömungsverluste minimiert.

In einer hierzu weiterführenden Ausführung ist der Abstand zwischen dem Rohrende des ersten Abgaskanals und der Öffnung des Verdünnungstunnels zum Mischrohr das 0,5-fache bis 5-fache, vorzugsweise das 1,5 bis 2-fache, des Durchmessers des Mischrohres. Bei einer derartigen Abhängigkeit wurden besonders gute Ergebnisse durch die weitestgehend reduzierte gegenseitige Beeinflussung der beiden Abgaswege erzielt.

Eine zusätzliche Verbesserung bezüglich der Homogenität der Strömungen erhält man, indem der Winkel zwischen den Mittelachsen des Verdünnungstunnels und des Mischrohres 10° bis 50°, vorzugsweise 20° bis 30° beträgt.

Vorteilhaft ist es, wenn die erste Abgasquelle ein Dieselmotor ist und die zweite Abgasquelle ein Otto-Motor ist, da der Eintritt in den Verdünnungstunnel über den ersten Abgasweg kürzer ist als über den zweiten Abgasweg und Wärmeverlust im Dieselabgas weitestgehend vermieden werden müssen.

Es wird somit eine Anlage zur Entnahme von Abgasproben von Verbrennungskraftmaschinen geschaffen, mit der über einen gemeinsamen Verdünnungstunnel und eine gemeinsame Probenahmesonde Partikelproben von Diesel- und Otto-Motoren entnommen werden können. Der Aufbau und somit Herstell- und Montagekosten werden gesenkt und gleichzeitig eine weitestgehend druckverlustfreie Mischung und Förderung sowie eine repräsentative Probenahme sichergestellt.

Ein Ausführungsbeispiel einer erfindungsgemäßen Anlage ist in den Figuren dargestellt und wird nachfolgend beschrieben.
Figur 1 zeigt schematisch einen Aufbau einer erfindungsgemäßen Anlage zur Entnahme von Abgasproben.
Figur 2 zeigt in vergrößerter Darstellung einen Ausschnitt der Anlage im Bereich der Mischzonen.

Die erfindungsgemäße Anlage zur Entnahme von Abgasproben von Verbrennungskraftmaschinen für Diesel- und Ottomotoren besteht aus einem ersten Abgaseinlass 2, über den ein erster Abgaskanal 4 mit einer Abgasquelle 6 fluidisch verbunden ist, die durch einen Dieselmotor eines Kraftfahrzeugs gebildet ist.

Dieser Abgaskanal 4 weist ein Rohrende 8 auf, welches konzentrisch innerhalb eines ersten Luftkanals 10 mündet. Dazu weist dieser eine Öffnung 12 in seiner Begrenzungswand 14 auf, durch die der Abgaskanal 4 senkrecht in den Luftkanal 10 ragt. Um konzentrisch im Luftkanal 10 zu münden, weist der Abgaskanal 4 eine 90° Umlenkung auf.

Am Anfang des Luftkanals 10 ist an diesem ein üblicherweise aus drei Filtern bestehender, erster Luftfilter 16 angeordnet, über den Luft in den Luftkanal 10 eingesaugt werden kann. Hinter dem Luftfilter befindet sich eine erste Regelklappe 18, um, falls notwendig, den Luftkanal 10 zu verschließen. Die Umlenkung des Abgaskanals 4 ist so ausgeführt, dass das offene Rohrende 8 zur zum Luftfilter 16 entgegengesetzten Seite gerichtet ist, so dass die Luftströmung und die Abgasströmung am Rohrende 8 eine gemeinsame Strömungsrichtung aufweisen.

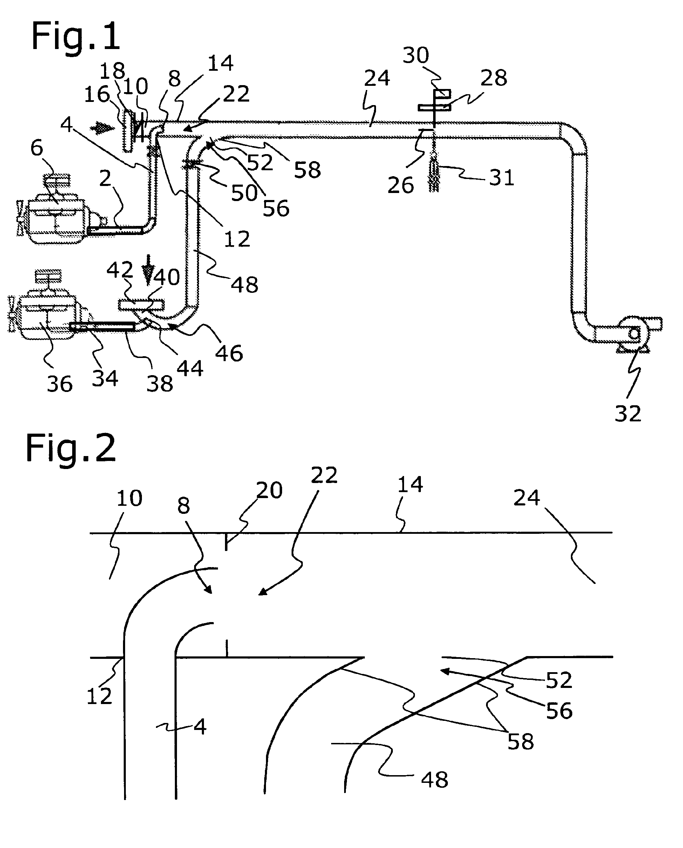

Wie insbesondere aus Figur 2 hervorgeht ist in Strömungsrichtung unmittelbar hinter dem Rohrende 8 an einer Begrenzungswand 14 des Luftkanals 10 eine Ringblende 20 angeordnet, durch welche der frei durchströmbare Querschnitt des Luftkanals verengt wird, so dass sich die Strömungsgeschwindigkeit erhöht und Turbulenzen entstehen. Durch diese Turbulenzen, die in verringerter Stärke auch durch die Querschnittsverengung in Folge des innenliegenden Abgaskanals 4 auftreten, entsteht in einer folgenden ersten Mischzone 22 eine homogene Vermischung des Abgases mit der Luft. Diese Mischzone kann einige Meter von der Abgasquelle 6 entfernt angeordnet sein.

An diese Mischzone 22 schließt sich ein Verdünnungstunnel 24 an, in dem ein gleichmäßiger Strom des Abgas-Luft-Gemisches vorhanden ist. Im Verdünnungstunnel 24 ist zentral zur Mittelachse eine Probenahmesonde 26 zur Entnahme einer Probe aus dem Mischstrom angeordnet. Der über die Probenahmesonde 26 aufgenommene Probestrom wird über einen beheizbaren Filter 28 einem Flammenionisationisationsdetektor zugeführt, über den die Kohlenwasserstoffe im Abgas bestimmt werden und daraufhin wahlweise zumindest einem Probebeutel 30 zugeführt. Zusätzlich wird über zumindest eine weitere Probenahmesonde 26 der Mischstrom über eine Filtereinheit 31 zur Bestimmung der Partikelemissionen geführt. Die Förderung der Analyseströme erfolgt jeweils über nicht dargestellte separate Pumpen.

Der übrige Mischgasstrom gelangt vom Verdünnungstunnel 24 zu einer regelbaren Förderpumpe 32, die zur Erzeugung eines ausreichenden Druckes zur Förderung der Luft und des Abgases bestimmt ist. Hier wird der Mischgasstrom ausgestoßen. Neben einer geregelten Förderpumpe 32 ist es ebenfalls möglich, vor der Förderpumpe eine Regelklappe oder eine überkritische Düse zur Einstellung des gewünschten Förderstroms anzuordnen.

Selbstverständlich kann die Anlage zusätzlich zum dargestellten Parükelprobenahmesystem auch eine weitere Entnahmevorrichtung für eine Abgasprobe aufweisen, mittels derer die Anteile an Stickoxiden, Kohlendioxid und Kohlenmonoxid im Abgas ermittelt werden können.

Erfindungsgemäß weist die Anlage zusätzlich zu den bekannten Aggregaten zur Messung der HC-Emissionen und Partikelemissionen am Dieselmotor zusätzlich einen zweiten Abgaseinlass 34 auf, der mit einer zweiten Abgasquelle 36 in Form eines Ottomotors, insbesondere eines direkteinspritzenden Ottomotors, verbunden werden kann, für den in Zukunft ebenfalls neben der HC-Emissionsmessung auch eine Partikelmessung erforderlich wird.

Ein zweiter Abgaskanal 38 ist über den zweiten Abgaseinlass 34 mit der Abgasquelle 36 fluidisch verbunden. Er mündet in der bereits zum ersten Abgasweg beschriebenen Weise in einen zweiten Luftkanal 40, an dessen Eintritt wiederum ein zweiter Luftfilter 42 angeordnet ist, um das Einbringen von Schadstoffen aus der Umgebungsluft in den Luftkanal 40 zu verhindern.

An ein Rohrende 44 des Abgaskanals 38 schließt sich eine zweite Mischzone 46 an, in der der Abgas- Luft- Mischstrom homogenisiert wird. Diese Mischzone 46 liegt möglichst nah an der Abgasquelle 36 und ist Teil eines Mischrohres 48, über welches der Mischgasstrom in den Verdünnungstunnel 24 geleitet wird. Zum möglichen Verschließen des Querschnitts des Mischrohres 48 ist im Mischrohr 48 eine zweite Regelklappe 50 angeordnet.

Das Mischrohr 48 endet in einer Öffnung 52 der Begrenzungswand 14 des Verdünnungstunnels 24, in den der Luftkanal 10 übergeht. Die Mittelachse des Endes 56 des Mischrohres 48 sowie die hierzu im Wesentlichen parallel verlaufenden Begrenzungswände 58 sind in einem Winkel von ca. 25° zur Mittelachse beziehungsweise den Begrenzungswänden 14 des Verdünnungstunnels 24 geneigt und zwar in der Weise, dass die Strömung aus dem Mischrohr 48 lediglich um diesen Winkel umgelenkt werden muss, um in den Verdünnungstunnel 24 zu gelangen. Bevorzugt sind Winkel zwischen 20° und 30°.

Der Abstand zwischen dem Rohrende 8 des ersten Abgaskanals 4 und dem hierzu am nächsten liegenden Teil der Öffnung 52 beträgt ca. 240 mm bei einem Rohrdurchmesser des Mischrohres 48 von 150mm und somit ungefähr das 1,6-fache des Rohrdurchmessers. Bevorzugt wird als Abstand das 1,5 bis 2-fache des Rohrdurchmessers gewählt. Durch diese Abmessungen werden Druckverluste weitestgehend ausgeschlossen.

Im Weiteren strömt das Abgas-Luftgemisch in gleicher Weise durch den Verdünnungstunnel 24 zur Probenahmesonde 26 beziehungsweise zur Förderpumpe 32 wie das Abgas-Luft-Gemisch aus der ersten Mischzone 22, so dass auch eine entsprechende Analyse stattfinden kann.

Es sollte deutlich sein, dass wahlweise entweder über die erste Mischzone 22 das Dieselabgas- Luft- Gemisch oder über die zweite Mischzone 46 das Ottomotor-Abgas-Luft-Gemisch durch den Verdünnungstunnel 24 zur Probenahme gefördert wird. Das jeweils nicht genutzte System wird über ein Schließen der ersten Regelklappe 18 oder der zweiten Regelklappe 50 fluidisch vom Verdünnungstunnel 24 getrennt, so dass möglichst keine Leckluft über den nicht benutzten Pfad angesaugt werden kann.

Durch den ausreichenden Abstand zwischen dem Rohrende 8 und der Öffnung 52 entsteht vor dieser Öffnung 52 in der ersten Mischzone 22 bei Verwendung des ersten Abgasweges eine homogene Strömung vor dem Erreichen der Öffnung 52, so dass beinahe keine zusätzlichen Verwirbelungen entstehen. Des Weiteren ist in diesem Bereich nicht mit Ablagerungen zu rechnen, da die zweite Mischzone 46, in der die meisten Ablagerungen auftreten können, entfernt von der Einleitstelle angeordnet ist. Zusätzlich besteht auch für den zweiten Abgasweg in diesem Bereich eine weitestgehend homogene Strömung. Entsprechend entstehen durch die Einleitstelle weder Druckverluste noch eine Verfälschung der Messergebnisse durch vorhandene Rückstände aus dem zweiten Abgasweg. Gleiches gilt auch bei der Verwendung des zweiten Abgasweges. Dieser führt erst in ausreichendem Abstand hinter der Einleitstelle beziehungsweise der Mischzone 22 des ersten Abgasweges in den Verdünnungstunnel 24, so dass durch den Abgasstrom keine Partikel aus dem ersten Abgasweg mitgerissen werden. Entsprechend ist hier eine Verfälschung der Messergebnisse ebenfalls weitestgehend ausgeschlossen, da in diesem Bereich nicht mit Rückständen des Dieselabgases zu rechnen ist. Da zusätzlich bei Verwendung des zweiten Abgasweges an der ersten Einleitstelle durch Schließen der Regelklappe 18 keine Strömung vorliegt, ist auch davon auszugehen, dass keine Rückstände aus der Mischzone mitgerissen werden.

Eine gegenseitige Beeinflussung der beiden Gasströme wird somit vermieden. Stattdessen wird durch diese Anlage der kritische Bereich der beiden Wege voneinander getrennt. Die Anlage eignet sich somit zur Messung des Abgases von Diesel- und Ottomotoren und hier insbesondere direkteinspritzenden Ottomotoren, ohne dass verschiedene Verdünnungstunnel oder Probenahmesonden verwendet werden müssen. Entsprechend wird der benötigte Bauraum verringert, sowie der apparative Aufwand deutlich reduziert, so dass Herstell- und Montagekosten verringert werden. Dies gelingt insbesondere durch Verwendung gleicher Bauteile, wie Verdünnungstunnel, Probenahmesonde, Filter aber auch Peripherie, also Regel- und Messinstrumente für beide Systeme.

Es wird noch darauf hingewiesen, dass das Abgas in einem definierten Verhältnis mit der Umgebungsluft verdünnt wird. Die Probenahme erfolgt jeweils proportional zum Durchfluss der Pumpe. Hierzu sind Probenahmesysteme mit variabler Verdünnung und Verdrängerpumpe ebenso bekannt wie Verdünnungssysteme mit kritisch durchströmten Venturirohr, wie sie beispielsweise in der ECE Richtlinie R 83 beschrieben werden. Die Anordnung der in diesen Anlagen verwendeten Durchflussreglem, Ventilen, Durchfluss-, Druck- und Temperaturmessgeräten ist ebenfalls bekannt und je nach verwendetem System unterschiedlich, so dass diese Möglichkeiten der Regelung hier als Fachwissen vorausgesetzt werden. Die vorliegende Erfindung ist für alle diese Formen der Probenahme geeignet. Die erfindungswesentlichen Merkmale sind unabhängig vom verwendeten System.

Es sollte deutlich sein, dass die vorliegende Erfindung nicht auf das beschriebene Ausführungsbeispiel beschränkt ist, sondern verschiedene Modifikationen innerhalb des Schutzbereichs des vorliegenden Hauptanspruchs möglich sind.

## Patentansprüche

1. Anlage zur Entnahme von Abgasproben von Verbrennungskraftmaschinen mit
einem ersten Abgaskanal (4), welcher über einen ersten Abgaseinlass (2) mit einer ersten Abgasquelle (6) fluldisch verbindbar ist,
einem ersten Luftkanal (10), in den über einen ersten Luftfilter (16) Umgebungsluft ansaugbar ist,
einer ersten Mischzone (22), In der der erste Abgaskanal (4) in den ersten Luftkanal (10) mündet,
einem Verdünnungstunnel (24), der von einem Abgas-Luft-Gemisch durchströmbar ist,
zumindest einer Probenahmesonde (26),
einer Pumpe (32) zur Förderung der Luft und des Abgases sowie Mitteln zur Regelung und Messung der Massenströme
**dadurch gekennzeichnet, dass**
die Anlage einen zweiten Abgaskanal (38), welcher über einen zweiten Abgaseinlass (34) mit einer zweiten Abgasquelle (36) fluidisch verbindbar ist und eine zweite Mischzone (46) aufweist, wobei die verdünnten Abgas-Luft-Massenströme wahlweise aus der ersten Abgasquelle (6) oder der zweiten Abgasquelle (36) in den einen Verdünnungstunnel (24) und zur zumindest einen Probenahmesonde (26) leitbar sind.

2. Anlage zur Entnahme von Abgasproben von Verbrennungskraftmaschinen nach Anspruch 1,
**dadurch gekennzeichnet, dass**
in der zweiten Mischzone (46) der zweite Abgaskanal (38) in einen zweiten Luftkanal (40), in den über einen zweiten Luftfilter (42) Umgebungsluft ansaugbar ist, mündet.

3. Anlage zur Entnahme von Abgasproben von Verbrennungskraftmaschinen nach einem der Ansprüche 1 oder 2,
**dadurch gekennzeichnet, dass**
die erste Mischzone (22) durch ein Rohrende (8) des ersten Abgaskanals (4), welches im Wesentlichen konzentrisch im ersten Luftkanal (10) angeordnet ist, gebildet ist.

4. Anlage zur Entnahme von Abgasproben von Verbrennungskraftmaschinen nach Anspruch 3,
**dadurch gekennzeichnet, dass**
unmittelbar hinter dem Rohrende (8) des ersten Abgaskanals (4) in der ersten Mischzone (22) eine Ringblende (20) angeordnet ist.

5. Anlage zur Entnahme von Abgasproben von Verbrennungskraftmaschinen nach einem der vorhergehenden Ansprüche,
**dadurch gekennzeichnet, dass**
in Strömungsrichtung hinter der ersten Mischzone (22) ein Mischrohr (48) in den Verdünnungstunnel (24) mündet, welches in Strömungsrichtung hinter der zweiten Mischzone (46) angeordnet ist, wobei der Verdünnungstunnel (24) an seiner Begrenzungswand (14) eine Öffnung (52) aufweist, welche durch das Mischrohr (48) verschlossen ist und an der das Mischrohr (48) endet.

6. Anlage zur Entnahme von Abgasproben von Verbrennungskraftmaschinen nach Anspruch 5,
**dadurch gekennzeichnet, dass**
im Mischrohr (48) und zwischen dem ersten Luftfilter (16) und der Mündung des Mischrohres (48) jeweils eine Regelklappe (18, 50) angeordnet ist.

7. Anlage zur Entnahme von Abgasproben von Verbrennungskraftmaschinen nach Anspruch 5 oder 6,
**dadurch gekennzeichnet, dass**
das Ende (56) des Mischrohres (48) schräg in Strömungsrichtung zum Verdünnungstunnel (24) angeordnet ist.

8. Anlage zur Entnahme von Abgasproben von Verbrennungskraftmaschinen nach Anspruch 7,
**dadurch gekennzeichnet, dass**
der Abstand zwischen dem Rohrende (8) des ersten Abgaskanals (4) und der Öffnung (52) des Verdünnungstunnels (24) zum Mischrohr (48) das 0,5-fache bis 5-fache, vorzugsweise das 1,5 bis 2-fache, des Durchmessers des Mischrohres (48) ist.

9. Anlage zur Entnahme von Abgasproben von Verbrennungskraftmaschinen nach einem der Ansprüche 7 oder 8,
**dadurch gekennzeichnet, dass**
der Winkel zwischen den Mittelachsen des Verdünnungstunnels (24) und des Mischrohres (48) 10° bis 50°, vorzugsweise 20° bis 30° beträgt.

## Claims

1. System for taking exhaust gas samples from internal combustion engines, comprising
a first exhaust gas duct (4) adapted to be fluidically connected with a first exhaust gas source (6) via a first exhaust gas inlet (2),
a first air duct (10) into which ambient air can be drawn via a first air filter (16),
a first mixing zone (22) in which the first exhaust gas duct (4) opens into the first air duct (10),
a dilution tunnel (24) adapted to be flown through by an exhaust gas/air mixture,
at least one sampling probe (26),
a pump (32) for conveying the air and the exhaust gas,
as well as means for controlling and measuring the mass flows,
**characterized in that**
the system comprises a second exhaust gas duct (38) adapted to be fluidically connected with a second exhaust gas source (36) via a second exhaust gas inlet (34) and comprising a second mixing zone (46), wherein the diluted exhaust gas/air mass flows can selectively be guided from either the first exhaust gas source (6) or the second exhaust gas source (36) into said one dilution tunnel (24) and to the at least one sampling probe (26).

2. System for taking exhaust gas samples from internal combustion engines as defined in claim 1, **characterized in that**, in the second mixing zone (46), the second exhaust gas duct (38) opens into a second air duct (40) into which ambient air can be drawn via a second air filter (42).

3. System for taking exhaust gas samples from internal combustion engines as defined in one of claims 1 or 2, **characterized in that** the first mixing zone (22) is formed by a pipe end (8) of the first exhaust gas duct (4), which pipe end is arranged substantially concentrically in the first air duct (10).

4. System for taking exhaust gas samples from internal combustion engines, as defined in claim 3, **characterized in that** an annular orifice (20) is arranged in the first mixing zone (22) immediately downstream of the pipe end (8) of the first exhaust gas duct (4).

5. System for taking exhaust gas samples from internal combustion engines of one of the preceding claims, **characterized in that** downstream of the first mixing zone (22), seen in the direction of flow, a mixing pipe (48) opens into the dilution tunnel (24), said pipe being arranged downstream of the second mixing zone (46), seen in the direction of flow, wherein the dilution tuner (24) has an opening (52) in its limiting wall (14) that is closed by the mixing pipe (48) and at which the mixing pipe (48) ends.

6. System for taking exhaust gas samples from internal combustion engines as defined in claim 5, **characterized in that** a respective control flap (18, 50) is arranged in the mixing pipe (48) and between the first air filter (16) and the outlet of the mixing pipe (48).

7. System for taking exhaust gas samples from internal combustion engines as defined in claim 5 or 6, **characterized in that** the end (56) of the mixing pipe (48) is arranged obliquely with respect to the dilution tunnel (24).

8. System for taking exhaust gas samples from internal combustion engines as defined in claim 7, **characterized in that** the distance between the pipe end (6) of the first exhaust gas duct (4) and of the opening (52) in the dilution tunnel (24) to the mixing pipe (48) is 0.5 times to 5 times, preferably 1.5 to 2 times of the diameter of the mixing pipe (48).

9. System for taking exhaust gas samples from internal combustion engines as defined in one of claims 7 or 8, **characterized in that** the angle between the central axes of the dilution tunnel (24) and the mixing pipe (48) is 10° to 50°, preferably 20° to 30°.

## Revendications

1. Installation de prélèvement d'échantillons de gaz d'échappement de moteurs à combustion interne, comprenant
un premier conduit de gaz d'échappement (4) apte à être relié de manière fluidique avec une première source de gaz d'échappement (5) via une première entrée de gaz d'échappement (2),
un premier conduit d'air (10), dans lequel air ambiant peut être aspiré à travers un premier filtre d'air (16),
une première zone de mélange (22), où ledit premier conduit de gaz d'échappement (4) débouche dans ledit premier conduit d'air (10),
un tunnel de dilution (24) susceptible d'être traversé par un mélange gaz d'échappement/air,
au moins une sonde de prélèvement (26),
une pompe (32) pour le refoulement de l'air et des gaz d'échappement,
ainsi que des moyens pour le réglage et le mesurage des flux massiques,
**caractérisée en ce que**
l'installation comprend un deuxième conduit de gaz d'échappement (38) susceptible d'être relié de manière fluidique avec une deuxième source de gaz d'échappement (36), via une deuxième entrée de gaz d'échappement (34), et une deuxième zone de mélange (46), les flux massiques de gaz d'échappement/air dilués pouvant être dirigés sélectivement soit de la première source de gaz d'échappement (6), soit de la deuxième source de gaz d'échappement (36) dans ledit un tunnel de dilution (24) et vers ladite au moins une sonde de prélèvement (26).

2. Installation de prélèvement d'échantillons de gaz d'échappement de moteurs à combustion interne selon la revendication 1, **caractérisée en ce que**, dans la deuxième zone de mélange (46 ), ledit deuxième conduit de gaz d'échappement (38) débouche dans un deuxième conduit d'air (40), dans lequel air ambiant peut être aspiré à travers un deuxième filtre d'air (42).

3. Installation de prélèvement d'échantillons de gaz d'échappement de moteurs à combustion interne selon l'une des revendications 1 ou 2, **caractérisée en ce que** ladite première zone de mélange (22) est formée par une extrémité de tube (8) dudit premier conduit de gaz d'échappement (4), ladite extrémité de tube étant disposée dans ledit premier conduit d'air (10) de manière sensiblement concentrique.

4. Installation de prélèvement d'échantillons de gaz d'échappement de moteurs à combustion interne selon la revendication 3, **caractérisée en ce qu'**une orifice annulaire (20) est disposée dans la première zone de mélange (22), directement en aval de ladite extrémité de tube (8) dudit premier conduit de gaz d'échappement (4).

5. Installation de prélèvement d'échantillons de gaz d'échappement de moteurs à combustion interne selon l'une quelconque des revendications précédentes, **caractérisée en ce qu'** un tube de mélange (48) débouche dans ledit tunnel de dilution (24) en aval de la première zone de mélange (22), vu dans la direction d'écoulement, ledit tube étant disposé en aval de la deuxième zone de mélange (46), vu dans la direction d'écoulement, ledit tunnel de dilution (24) comprenant une orifice (52) dans sa paroi de délimitation (14), qui est fermée par ledit tube de mélange (48) et à laquelle se termine ledit tube de mélange (48).

6. Installation de prélèvement d'échantillons de gaz d'échappement de moteurs à combustion interne selon la revendication 5, **caractérisée en ce qu'**un volet de réglage (18, 50) est disposé respectivement dans ledit tube de mélange (48) et entre ledit premier filtre d'air (16) et l'ouverture dudit tube de mélange (48).

7. Installation de prélèvement d'échantillons de gaz d'échappement de moteurs à combustion interne selon la revendication 5 ou 6, **caractérisée en ce que** l'extrémité (56) du tube de mélange (48) est disposée de manière oblique, vu dans la direction d'écoulement, par rapport au tunnel de dilution (24).

8. Installation de prélèvement d'échantillons de gaz d'échappement de moteurs à combustion interne selon la revendication 7, **caractérisée en ce que** la distance de l'extrémité de tube (8) du premier conduit de gaz d'échappement (4) et de l'ouverture (52) dans ledit tunnel de dilution (24) au tube de mélange (48) est 0,5 fois à 5 fois, de préférence 1,5 à 2 fois le diamètre dudit tube de mélange (48).

9. Installation de prélèvement d'échantillons de gaz d'échappement de moteurs à combustion interne selon l'une des revendications 7 ou 8, **caractérisée en ce que** l'angle entre les axes centrales du tunnel de dilution (24) et du tube de mélange (48) est de 10° à 50°, de préférence de 20° à 30°.
